# EUROPÄISCHE PATENTANMELDUNG

(11) **EP 2 846 457 A2**
(43) Veröffentlichungstag der Anmeldung: **11.03.2015**
(21) Anmeldenummer: 14002985.1
(22) Anmeldetag: 29.08.2014
(51) Int. Cl.: H02P 29/00, E05F 15/00, H02P 7/285

(54) **Vorrichtung zum Antrieb einer Tür**

(30) Priorität: 05.09.2013 DE 102013109680
(71) Anmelder: DORMA Deutschland GmbH, 58256 Ennepetal (DE)
(72) Erfinder: Hüttemeister, Frank, 58638 Iserlohn (DE)

(57) **Zusammenfassung**

Die Erfindung betrifft eine Vorrichtung (1) zum Antrieb einer Tür, wobei durch ein Elektromotor (10) eine Kraft auf die Tür zu einer Bewegung der Tür übertragbar ist und der Elektromotor (10) einen ersten Anschlusspol (12) und einen zweiten Anschlusspol (14) aufweist, wobei der erste Anschlusspol (12) mit einem ersten Energiequellenpol (22) einer Energiequelle (21) und der zweite Anschlusspol (14) mit einem zweiten Energiequellenpol (24) der Energiequelle (21) elektrisch für einen Betrieb des Elektromotors (10) verbindbar ist.

Erfindungsgemäß ist vorgesehen, dass an dem ersten Anschlusspol (12) und dem zweiten Anschlusspol (14) eine Schalteinheit (30) derart elektrisch verbunden ist, dass im Falle einer Beschleunigung der Tür verursacht durch eine äußere Krafteinwirkung auf die Tür eine Umpolung des ersten Anschlusspols (12) und des zweiten Anschlusspols (14) mit dem ersten Energiequellenpol (22) und dem zweiten Energiequellenpol (24) erfolgt.

## Beschreibung

Die Erfindung betrifft eine Vorrichtung zum Antrieb einer Tür, gemäß dem Oberbegriff von Anspruch 1. Weiterhin betrifft die Erfindung ein Verfahren zum Antrieb einer Tür, gemäß dem Oberbegriff von Anspruch 11.

### Stand der Technik

Es ist bekannt, Türen mit einem elektrischen Antrieb zu versehen. Der elektrische Antrieb kann dabei über einen Elektromotor erfolgen, der ein Öffnen oder ein Schließen der Tür ermöglicht. Der Elektromotor kann dabei direkt über eine Antriebswelle mit der Tür in Wirkverbindung stehen. Durch Drehung der Abtriebswelle durch den Elektromotor wird auch die Tür gedreht. Es kann sich dabei um eine Drehtür handeln, wie sie am Eingang eines Besucherzentrums zum Ein- und Auslass von Besuchern angeordnet sein kann. Dabei kann die Flügeltür durch einen Besucher durch eine äußere Krafteinwirkung, die von dem Besucher auf die Flügeltür übertragbar ist, beschleunigt werden. Durch die Beschleunigung wirkt der Elektromotor als Generator, sodass durch den Elektromotor eine Span-nung induziert wird. Diese Spannung kann größer als eine Betriebsspannung sein, durch welche der Elektromotor angetrieben wird. Als nachteilig hat sich herausgestellt, dass sich die Erhöhung der Betriebsspannung negativ auf eine zum Antrieb der Tür verwendete Peripherie auswirkt. Die verwendete Peripherie kann dabei z. B. eine Kontrolleinheit sein, durch die z.B. eine Energiezufuhr des Elektromotors durch die Energiequelle kontrollierbar ist. Die Kontrolleinheit kann dabei empfindliche elektronische Bauelemente aufweisen, die durch eine Überhöhung der Betriebsspannung zerstört werden könnten.

### Offenbarung der Erfindung

Es ist daher Aufgabe der Erfindung eine Vorrichtung und ein Verfahren zum Antrieb einer Tür bereitzustellen, wobei die Vorrichtung und das Verfahren einfach und betriebssicher aufgebaut sind. Insbesondere ist es eine Aufgabe der vorliegenden Erfindung eine Umwandlung von mechanischer Energie in elektrischer Energie durch den Elektromotor im Wesentlichen zu verhindern.

Zur Lösung dieser Aufgabe wird eine Vorrichtung mit den Merkmalen des Anspruches 1, sowie ein Verfahren mit den Merkmalen des Anspruches 11 vorgeschlagen, insbesondere mit den Merkmalen des jeweiligen kennzeichnenden Teils, In den abhängigen Ansprüchen sind bevorzugte Weiterbildungen ausgeführt. Dabei können die in den Ansprüchen und in der Beschreibung erwähnten Merkmale jeweils für sich oder in Kombination erfindungswesentlich sein. Merkmale und Details, die im Zusammenhang mit dem erfindungsgemäßen Verfahren beschrieben sind, gelten dabei selbstverständlich auch im Zusammenhang mit der erfindungsgemäßen Vorrichtung und umgekehrt.

Die Erfindung offenbart eine Vorrichtung zum Antrieb einer Tür, wobei durch einen Elektromotor eine Kraft auf die Tür zu einer Bewegung der Tür übertragbar ist. Der Elektromotor weist einen ersten Anschlusspol und einen zweiten Anschlusspol auf, wobei der erste Anschlusspol mit einem ersten Energiequellenpol einer Energiequelle und der zweite Anschlusspol mit einem zweiten Energiequellenpol der Energiequelle elektrisch für einen Betrieb des Elektromotors verbindbar sind. Erfindungsgemäß ist vorgesehen, dass an dem ersten Anschlusspol und dem zweiten Anschlusspol eine Schalteinheit derart elektrisch verbunden ist, dass im Falle einer Beschleunigung der Tür, verursacht durch eine äußere Krafteinwirkung auf die Tür, eine Umpolung des ersten Anspruchspols und des zweiten Anspruchspols mit dem ersten Energiequellenpol und dem zweiten Energiequellenpol erfolgt. Der Elektromotor weist dabei eine Antriebswelle auf, die bei einem Anlegen einer Spannung an dem ersten und dem zweiten Anschlusspol eine Drehbewegung ausführt. Die Antriebswelle kann mit einer Tür derart in Wirkverbindung stehen, dass durch die Drehbewegung der Antriebswelle die Tür bewegt werden kann. Bei einer äußeren Krafteinwirkung auf die Tür kann die Krafteinwirkung auf die Antriebswelle derart übertragen werden, sodass der Elektromotor als Generator wirkt. In diesem Fall kann eine Spannung durch den Elektromotor erzeugt werden. Der Elektromotor dient dementsprechend als Generator. Die dadurch erzeugte Spannung kann dabei einen zuverlässigen Betrieb der Vorrichtung zum Antrieb einer Tür stören. So kann z. B. eine Kontrolleinheit zur kontrollierten Energieabgabe der Energiequelle an den Elektromotor zum Einsatz kommen, wobei die Kontrolleinheit elektronische Elemente aufweisen kann, die durch eine erhöhte induzierte Spannung durch den Elektromotor zerstört werden können. Um einer Zerstörung von Komponenten, insbesondere für den Antrieb der Tür benötigte elektronische und/oder elektrische Komponenten, entgegenzuwirken erfolgt im Falle einer Beschleunigung der Tür eine Umpolung des ersten Anschlusspols und des zweiten Anschlusspols mit dem ersten Energiequellenpol und dem zweiten Energiequellenpol, Damit kann die Betriebsspannung, welche von der Energiequelle abgreifbar ist, nicht durch einen Generatorbetrieb des Elektromotors erhöht werden. Die Betriebsspannung kann dementsprechend höchstens sinken, aber nicht steigen, wodurch elektrische und/oder elektronische Komponenten, welche zur Kontrolle von elektrischen Betriebsgrößen zum Antrieb einer Tür genutzt werden können, wirkungsvoll vor einer erhöhten Betriebsspannung geschützt werden.

Es ist vorteilhaft, dass die Schalteinheit wenigstens zwei Schalter zur Umpolung aufweist. Die Schalteinheit kann dabei zwei Wechselschalter aufweisen, wobei durch die zwei Wechselschalter eine Umpolung des ersten Anschlusspols und des zweiten Anschlusspols mit dem ersten Energiequellenpol und dem zweiten Energiequellenpol erfolgen kann. Ebenfalls ist es denkbar, dass die Schalteinheit vier Halbleiterschalter aufweisen kann, wodurch ebenfalls eine Umpolung des ersten Anschlusspols und des zweiten Anschlusspols mit dem ersten Energiequellenpol und dem zweiten Energiequellenpol erfolgen kann. Die vier Halbleiterschalter können dabei zu einer H-Brückenschaltung aufgebaut sein. Die Halbleiterschalter können dabei Transistoren oder Feldeffekttransistoren sein.

Besonders vorteilhaft ist es, dass die Schalteinheit durch eine Kontrolleinheit kontrollierbar ist. Die Kontrolleinheit kann dabei eine Rechnereinheit sein, über die die Schalter der Schalteinheit kontrolliert werden können. Unter Kontrolle wird in diesem Zusammenhang ein Steuern oder Regeln der Schalteinheit verstanden. So kann die Schalteinheit durch ein vorgegebenes Regelwerk geregelt werden. Die Schalteinheit kann z. B. einen Impuls von der Kontrolleinheit erhalten, wodurch eine Umpolung des ersten Anschlusspols und des zweiten Anschlusspols mit dem ersten Energiequellenpol und dem zweiten Energiequellenpol erfolgt.

Zudem ist es vorteilhaft, dass ein elektrischer Widerstand derart zuschaltbar ist, dass eine an dem ersten Energiequellenpol und dem zweiten Energiequellenpol abgreifbare Spannung reduzierbar ist. Der elektrische Widerstand kann als Ballastwiderstand bei einer Spannungsüberhöhung die Betriebsspannung belasten und damit die Betriebsspannung verringern. Der elektrische Widerstand kann an einer Ballastschaltung elektrisch angeordnet sein, wobei die Ballastschaltung die Betriebsspannung mit einer Referenzspannung vergleichen kann. Im Falle, dass die BetriebsSpannung über der Referenzspannung liegt, kann der elektrische Widerstand parallel zur Betriebsspannung zugeschaltet werden. Fällt die Betriebsspannung unter der Referenzspannung, so kann der elektrische Widerstand abgeschaltet werden.

Besonders vorteilhaft ist es, dass ein Spannungsmessgerät zur Messung einer Betriebsspannung zwischen dem ersten Energiequellenpol und dem zweiten Energiequellenpol elektrisch angeordnet ist. Durch die Messung der Betriebsspannung kann die gesamte Betriebsspannung, die durch die Energiequelle und dem Elektromotor als Generator erzeugt wird gemessen werden. Die Betriebsspannung kann mit einer Referenzspannung verglichen werden, wobei im Falle einer Erhöhung der Betriebsspannung über der Referenzspannung ein elektrischer Widerstand als Ballastwiderstand zugeschaltet werden kann. Über den Ballastwiderstand kann eine Spannung abfallen, wodurch sich die Betriebsspannung verringert. Der Ballastwiderstand kann dabei auch variabel ausgestaltet sein. Ein variabler Widerstand kann z. B. ein Potentiometer sein. Das Spannungsmessgerät kann an der Kontrolleinheit elektrisch verbunden sein, wobei über die Kontrolleinheit die Spannungswerte ausgelesen werden können.

Ferner ist es denkbar, dass zur Unterbrechung die für den Betrieb des Elektromotors benötigte Stromzufuhr ein Unterbrechungsschalter zwischen der Spannungsquelle und dem Elektromotor angeordnet ist. Durch Einsatz des Unterbrechungsschalters kann bei einer Überhöhung der Betriebsspannung verursacht durch die induzierte Spannung des Elektromotors als Generator, die Betriebsspannung gesenkt werden. Der Unterbrechungsschalter kann an der Kontrolleinheit elektrisch angebunden sein. Dadurch kann der Unterbrechungsschalter je nach Betriebsspannung einund ausgeschaltet werden.

Optional ist es denkbar, dass die Schalteinheit auf einer Platine, insbesondere in SMD-Technik angeordnet ist. Die SMD-Technik (Small Mounted Devices) ermöglicht einen platzsparenden Zusammenbau der Schalteinheit auf einer Platine. Dabei werden die Bauelemente der Schalteinheit auf einer Fläche der Platine aufgelötet. Auf der Fläche der Platine können Leiterbahnen ausgebildet sein, die für den elektrischen Kontakt unter den Bauelementen sorgen können. An der Platine kann wenigstens ein Anschlusselement zur Erzeugung eines elektrischen Kontaktes angeordnet sein, an das der Elektromotor elektrisch verbunden werden kann. Das Anschlusselement kann dabei eine metallische Schraubklemme sein, wobei durch die metallische Schraubklemme ein Elektrokabel elektrisch leitend eingeklemmt werden kann. Das Elektrokabel kann als Zuleitung für den Elektromotor dienen. Damit kann ein einfacher Ein- und Ausbau des Elektromotors über das Elektrokabel von und an der Platine ermöglicht werden.

Erfindungsgemäß kann es vorgesehen sein, dass die Platine durch eine elektrische Steckverbindung mit dem ersten Energiequellenpol und dem zweiten Energiequellenpol verbunden ist. Die Steckverbindung ermöglicht einen einfachen elektrischen Anschluss der Energiequelle an die Platine. Über die Steckverbindung kann ein elektrischer Kontakt der Energiequelle mit der Platine erfolgen. Die Steckverbindung kann dabei reversibel ausgeführt sein, wodurch eine reversible elektrische Verbindung und eine elektrische Trennung der Platine von der Energiequelle ermöglicht werden kann. Dabei kann die Energiequelle einen männlichen Teil eines Steckverbinders aufweisen und die Platine einen komplementären weiblichen Teil zur Schaffung eines elektrischen Kontaktes aufweisen. Bei Einführung des männlichen Teils in das weibliche Teil kann dadurch der elektrische Kontakt geschaffen werden. Der männliche Teil kann dabei ein Stecker sein, der mit einer Buchse als weibliches Teil eine elektrische Verbindung eingehen kann.

Vorteilhaft ist es ebenfalls, dass die Schalteinheit in einem Gehäuse angeordnet ist. Das Gehäuse kann dabei Staub- und/oder Schmutzabweisend ausgestaltet sein. Das Gehäuse kann zweischalig ausgeführt sein, wobei in einer ersten Schale die Schalteinheit angeordnet werden kann. Die Anordnung der Schalteinheit an die erste Schale kann über Abstandshalter erfolgen. Dabei kann die Schalteinheit über eine Schraubverbindung an die erste Schale angeordnet werden. Auch ein Kleb- und/oder Schweißverfahren zur Anbringung der Schalteinheit an die erste Schale ist dabei denkbar. An der Nahtstelle der ersten Schale zu der zweiten Schale kann dabei ein Dichtelement zum Einsatz kommen. Dadurch kann das Gehäuse ebenfalls wasserabweisend oder wasserdicht ausgeführt sein. Ebenfalls ist es denkbar, dass das Gehäuse durch ein Spritzgussverfahren um die Schalteinheit umspritzt wird.

Besonders vorteilhaft ist es, dass zwischen dem Elektromotor und der Tür mechanisch ein selbsthemmendes Getriebe angeordnet ist. Durch Anordnung eines Selbsthemmenden Getriebes zwischen dem Elektromotor und der Tür kann die äußere Krafteinwirkung auf die Tür wirkungsvoll eine Beschleunigung der Antriebswelle des Elektromotors verhindern. Dazu kann die Antriebswelle des Elektromotors eine Schnecke aufweisen, die ein Zahnrad antreibt. Die Drehbewegung des Zahnrades kann dabei auf die Tür übertragen werden. Der Versuch der Drehung des Zahnrades durch eine äußere Krafteinwirkung auf die Tür bewirkt dabei keine Drehung der Antriebswelle des Elektromotors. Nur über die Schnecke der Antriebswelle des Elektromotors kann das Zahnrad in eine Drehbewegung gesetzt werden.

Die erfindungsgemäße Aufgabe wird ebenfalls gelöst durch ein Verfahren zum Antrieb einer Tür, gemäß dem Patentanspruch 11 wobei durch einen Elektromotor eine Kraft auf die Tür zu einer Bewegung der Tür übertragen wird. Dabei weist der Elektromotor einen ersten Anschlusspol und einen zweiten Anschlusspol auf, wobei der erste Anschlusspol mit einem ersten Energiequellenpol an einer Energiequelle und der zweite Anschlusspol mit einem zweiten Energiequellenpol der Energiequelle elektrisch für einen Betrieb des Elektromotors verbunden werden. Erfindungsgemäß ist dabei vorgesehen, dass an dem ersten Anschlusspol und dem zweiten Anschlusspol eine Schalteinheit derart elektrisch verbunden ist, dass im Falle einer Beschleunigung der Tür, verursacht durch eine äußere Krafteinwirkung auf die Tür, eine Umpolung des ersten Anschlusspols und des zweiten Anschlusspols mit dem ersten Energiequellenpol und dem zweiten Energiequellenpol erfolgt.

Besonders vorteilhaft ist es, dass eine an dem ersten Energiequellenpol und dem zweiten Energiequellenpol anliagende Spannung mit einer Referenzspannung verglichen wird und im Falle einer Erhöhung der anliegenden Spannung von der Referenzspannung ein elektrischer Widerstand zur Senkung der anliegenden Spannung zugeschaltet wird. Durch den elektrischen Anschluss eines elektrischen Widerstandes, der als Ballastwiderstand fungiert, im Falle einer Erhöhung der anliegenden Spannung kann wirkungsvoll eine negative Einwirkung durch eine überhöhte Betriebsspannung an einer elektrischen oder elektronischen Peripherie ausgeschlossen werden. So können z.B. auch elektrische Komponenten der Schalteinheit wirkungsvoll vor einer überhöhten Betriebsspannung geschützt werden. Die Schalteinheit kann elektronische Bauelemente wie z. B. Transistoren aufweisen, die durch die Absenkung der erhöhten Betriebsspannung geschützt werden können. An dem Ballastwiderstand kann dementsprechend überflüssige Energie abgeführt werden.

Besonders vorteilhaft ist es, dass die Umpolung durch eine Kontrolleinheit durchgeführt wird, insbesondere gleichzeitig durchgeführt wird. Die Kontrolleinheit kann dabei eine Recheneinheit aufweisen, wodurch die Umpolung erfolgen kann. Die gleichzeitige Umpolung gewährleistet es, dass der Motorstrom im Generatorbetrieb die Betriebsspannung immer belastet. So kann gewährleistet werden, dass die Belastung der Betriebsspannung allenfalls sinken kann.

Weitere Maßnahmen und Vorteile der Erfindung ergeben sich aus den Ansprüchen der nachfolgenden Beschreibung und den Zeichnungen. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Ansicht einer Schalteinheit, welche eine Umpolung eines ersten Anschlusspols und eines zweiten Anschlusspols mit einem ersten Energiequellenpol und einem zweiten Energiequellenpol ermöglicht,
- Fig. 2: eine schematische Ansicht einer erfindungsgemäßen Vorrichtung, wobei eine Schalteinheit zwei Wechselschalter aufweist und
- Fig. 3: eine schematische Ansicht einer erfindungsgemäßen Vorrichtung, wobei eine Umpolung eines ersten Anschlusspols und eines zweiten Anschlusspols mit einem ersten Energiequellenpol und einem zweiten Energiequellenpol durch vier Schalter erfolgt.

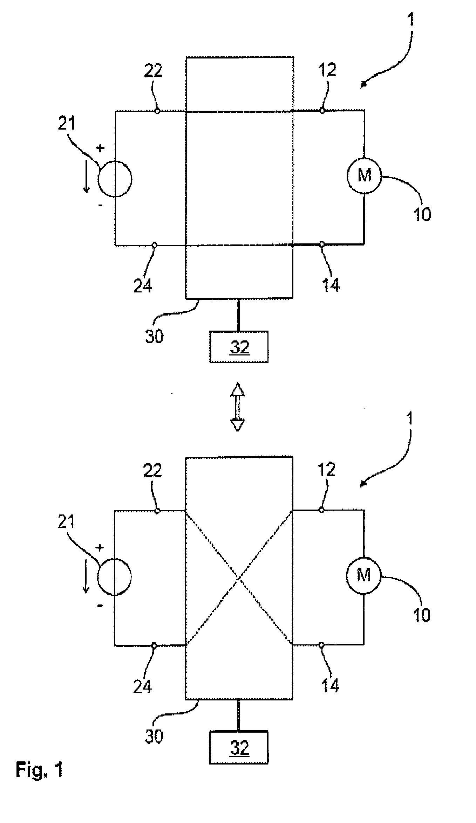

In Figur 1 ist schematisch eine Vorrichtung 1 mit einer Schalteinheit 30 dargestellt, wobei durch die Schalteinheit 30 eine Umpolung eines ersten Anschlusspols 12 und eines zweiten Anschlusspols 14 mit einem ersten Energiequellenpol 22 und einem zweiten Energiequellenpol 24 erfolgt. Die Schalteinheit 30 verfügt dabei über Schaltelemente, wodurch ein elektrischer Kontakt zwischen dem ersten Anschlusspol 12 und dem zweiten Anschlusspol 14 und dem ersten Energiequellenpol 22 und dem zweiten Energiequellenpol 24 getauscht werden kann. Die Schalteinheit 30 ist dabei mit einer Kontrolleinheit 32 verbunden, wobei über die Kontrolleinheit 32 die Schaltelemente der Schalteinheit 30 kontrolliert werden können.

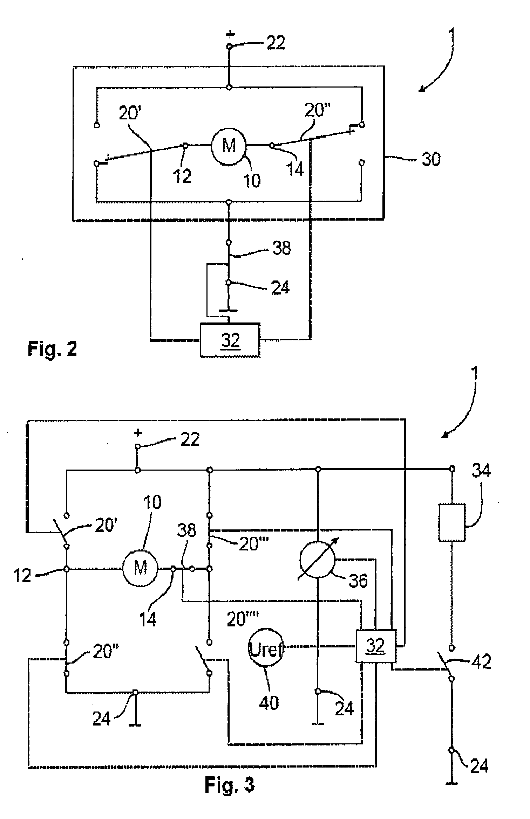

In Figur 2 ist schematisch eine erfindungsgemäße Vorrichtung 1 dargestellt, wobei in einer Schalteinheit 30 zwei Wechselschalter 20' und 20" zum Einsatz kommen. Die Schalteinheit 30 ist dabei mit einem ersten Energiequellenpol 22 elektrisch verbunden. Über den ersten Energiequellenpol 22 ist ein zweiter Anschlusspol 14 eines Elektromotors 10 elektrisch verbunden. Ein erster Anschlusspol 12 des Elektromotors 10 ist dabei über einen geschlossenen Schalter 38 mit einem zweiten Energiequellenpol 24 elektrisch verbunden. Bei dem Schalter 20' und dem Schalter 20" handelt es sich jeweils um einen Wechselschalter. Durch Betätigung des Wechselschalters 20' und des Wechselschalters 20" kann der erste Energiequellenpol 22 mit dem ersten Anschlusspol 12 des Elektromotors verbunden werden. Durch eine gleichzeitige Umschaltung des Wechselschalters 20" kann der zweite Anschlusspol 14 des Elektromotors 10 mit dem zweiten Energiequellenpol 24 elektrifiziert werden. Dadurch ist eine Umpolung des Motors 10 an dem ersten Energiequellenpol 22 und dem zweiten Energiequellenpol 24 möglich. Der Wechselschalter 20' und der Wechselschalter 20" wird dabei über eine Kontrolleinheit 32 gesteuert. Ebenfalls über die Kontrolleinheit 32 wird der Unterbrechungsschalter 38 gesteuert, wobei über den Unterbrechungsschalter 38 in einer Offenstellung des Unterbrechungsschalters 38 die Stromzufuhr zu dem Elektromotor 10 unterbrochen werden kann.

In Figur 3 ist eine schematische Darstellung einer erfindungsgemäßen Vorrichtung 1 dargestellt. Ein erster Energiequellepol 22 ist dabei über einen geschlossenen Schalter 20'" mit einem zweiten Anschlusspol 14 eines Elektromotors 10 über einen geschlossen Unterbrechungsschalter 38 elektrisch verbunden. Der Unterbrechungsschalter 38 ist dabei mit einer Kontrolleinheit 32 verbunden, wobei durch die Kontrolleinheit 32 der Unterbrechungsschalter 38 ein- und ausgeschaltet werden kann. Der Unterbrechungsschalter 38 kann dabei ein Relais oder eine Transistor sein. Ein zweiter Energiequellenpol 24 ist dabei über einen elektrischen Schalter 20" mit einem ersten Anschlusspol 12 eines des Elektromotors 10 verbunden. Durch Schließen eines Schalters 20' und Öffnen des Schalters 20'" kann der erste Energiequellenpol 22 mit dem ersten Anschlusspol 12 des Elektromotors 10 elektrisch verbunden werden. Gleichzeitig kann der Schalter 20" geöffnet werden und ein Schalter 20"" geschlossen werden, wodurch der zweite Anschlusspol 14 mit dem zweiten Energiequellenpol 24 elektrisch verbunden werden. Die Schalter 20', 20", 20'" und 20"" sind mit einer Kontrolleinheit 32 verbunden, wobei die Kontrolleinheit 32 die Schalter 20', 20", 20'" und 20"" kontrolliert werden können. Durch die Kontrolleinheit 32 können daher die Schalter 20', 20", 20'" und 20"" geöffnet und geschlossen werden. Zwischen dem ersten Energiequellenpol 22 und dem zweiten Energiequellenpol 24 ist ein Spannungsmessgerät 36 elektrisch angeordnet. Über das Spannungsmessgerät 36 kann die Spannung zwischen dem ersten Energiequellenpol 22 und dem zweiten Energiequellenpol 24 erfasst werden, wobei der erfasste Spannungswert durch das Spannungsmessgerät 36 an die Kontrolleinheit 32 übermittelbar ist. Die Übermittlung kann dabei drahtlos oder drahtgebunden erfolgen. Die Kontrolleinheit 32 verfügt über eine Referenzspannung 40, wobei die erfasste Spannung zwischen dem Energiequellenpol 22 und dem zweiten Energiequellenpol 24 mit der Referenzspannung 40 verglichen wird. Der Vergleich kann dabei permanent erfolgen. Im Falle, dass die erfasste Spannung durch das Spannungsmessgerät 36 zwischen dem ersten Energiequellenpol 22 und dem zweiten Energiequellenpol 24 die Referenzspannung 40 übersteigt, kann eine Umpolung des Elektromotors an dem ersten Energiequellenpol 22 und dem zweiten Energiequellenpol 24 erfolgen. An der Kontrolleinheit 32 ist ebenfalls ein Schalter 42 angeordnet, wobei über den Schalter 42 ein elektrischer Widerstand 34 zur Senkung der Betriebsspannung hinzugeschaltet werden.

### Bezugszeichenliste

- 1: Vorrichtung
- 10: Elektromotor
- 12: erster Anschlusspol
- 14: zweiter Anschlusspols
- 18: Schalteinheit
- 20': Schalter
- 20'': Schalter
- 20''': Schalter
- 20'''': Schalter
- 21: Energiequelle
- 22: erster Energiequellenpol
- 24: zweiter Energiequellenpol
- 30: Schalteinheit
- 32: Kontrolleinheit
- 34: Widerstand
- 36: Spannungsmessgerät
- 38: Unterbrechungsschalter
- 40: Referenzspannung

## Patentansprüche

1. Vorrichtung (1) zum Antrieb einer Tür, wobei durch ein Elektromotor (10) eine Kraft auf die Tür zu einer Bewegung der Tür übertragbar ist und der Elektromotor (10) einen ersten Anschlusspol (12) und einen zweiten Anschlusspol (14) aufweist, wobei der erste Anschlusspol (12) mit einem ersten Energiequellenpol (22) einer Energiequelle (21) und der zweite Anschlusspol (14) mit einem zweiten Energie-quellenpol (24) der Energiequelle (21) elektrisch für einen Betrieb des Elektromotors (10) verbindbar ist, **dadurch gekennzeichnet, dass** an dem ersten Anschlusspol (12) und dem zweiten Anschlusspol (14) eine Schalteinheit (30) derart elektrisch verbunden ist, dass im Falle einer Beschleunigung der Tür, verursacht durch eine äußere Krafteinwirkung auf die Tür, eine Umpolung des ersten Anschlusspols (12) und des zweiten Anschlusspols (14) mit dem ersten Energie-quellenpol (22) und dem zweiten Energiequellenpol (24) erfolgt.

2. Vorrichtung (1) gemäß Anspruch 1, **dadurch gekennzeichnet, dass** die Schalteinheit (18) wenigstens zwei Schalter (20) zur Umpolung aufweist.

3. Vorrichtung (1) gemäß Anspruch 1 oder 2, **dadurch gekennzeichnet, dass** die Schalteinheit (30) durch eine Kontrolleinheit (32) kontrollier-bar ist.

4. Vorrichtung (1) gemäß einem der Ansprüche 1 bis 3, **dadurch gekennzeichnet, dass** ein elektrischer Widerstand (34) elektrisch derart zuschaltbar ist, dass eine an dem ersten Energiequellenpol (22) und dem zweiten Energiequellenpol (24) abgreifbare Spannung reduzierbar ist.

5. Vorrichtung (1) gemäß einem der vorhergehenden Ansprüchen, **dadurch gekennzeichnet, dass** ein Spannungsmessgerät (36) zur Messung einer Betriebsspannung zwischen dem ersten Energiequel-lenpol (22) und dem zweiten Energiequellenpol (24) elektrisch ange-ordnet ist.

6. Vorrichtung (1) gemäß einem der vorhergehenden Ansprüche, **dadurch gekennzeichnet, dass** zur Unterbrechung die für den Betrieb des Elektromotors (10) benötigte Stromzufuhr ein Unterbrechungs-schalter (38) an dem ersten Anschlusspol (12) oder zweiten Anschlusspol (14) elektrisch angeordnet ist.

7. Vorrichtung (1) gemäß einem der vorhergehenden Ansprüche, **dadurch gekennzeichnet, dass** die Schalteinheit (30) auf einer Plati-ne, insbesondere in SMD-Technik angeordnet ist.

8. Vorrichtung (1).gemäß Anspruch 7, **dadurch gekennzeichnet, dass** die Platine durch eine elektrische Steckverbindung mit dem ersten Energiequellenpol (22) und dem zweiten Energiequellenpol (24) verbunden ist.

9. Vorrichtung (1) gemäß einem der vorhergehenden Ansprüche, **dadurch gekennzeichnet, dass** die Schalteinheit (30) in einem Gehäuse angeordnet ist.

10. Vorrichtung (1) gemäß einem der vorhergehenden Ansprüche, **dadurch gekennzeichnet, dass** zwischen dem Elektromotor (10) und der Tür mechanisch ein selbsthemmendes Getriebe angeordnet ist.

11. Vorrichtung (1) zum Antrieb einer Tür, wobei durch ein Elektromotor (10) eine Kraft auf die Tür zu einer Bewegung der Tür übertragen wird und der Elektromotor (10) einen ersten Anschlusspol (12) und einen zweiten Anschlusspol (14) aufweist, wobei der erste Anschlusspol (12) mit einem ersten Energiequellenpol (22) einer Energiequelle (21) und der zweite Anschlusspol (14) mit einem zweiten Energiequellenpol (24) der Energiequelle (21) elektrisch für einen Betrieb des Elektromotors (10) verbunden werden, **dadurch gekennzeichnet, dass** an dem ersten Anschlusspol (12) und dem zweiten Anschlusspol (14) eine Schalteinheit (30) derart elektrisch verbunden ist, dass im Falle einer Beschleunigung der Tür verursacht durch eine äußere Krafteinwirkung auf die Tür, eine Umpolung des ersten Anschlusspols (12) und des zweiten Anschlusspols (14) mit dem ersten Energiequellenpol (22) und dem zweiten Energiequellenpol (24) erfolgt.

12. Verfahren gemäß Anspruch 10, **dadurch gekennzeichnet, dass** eine an dem ersten Energiequellenpol (22) und dem zweiten Energiequellenpol (24) anliegende Spannung mit einer Referenzspannung (40) verglichen wird und im Falle einer Erhöhung der anliegenden Spannung von der Referenzspannung (40) ein elektrischer Widerstand (34) zur Senkung der anliegenden Spannung zugeschaltet wird.

13. Verfahren gemäß Anspruch 10 oder 11, **dadurch gekennzeichnet, dass** die Umpolung durch eine Kontrolleinheit (32) durchgeführt wird, insbesondere gleichzeitig durchgeführt wird.

14. Verfahren gemäß einem der Ansprüche 11 bis 13, weiches auf einer Vorrichtung gemäß einem der Ansprüche 1 bis 10 betrieben wird.
